# EUROPEAN PATENT APPLICATION

(11) **EP 1 926 096 A1**
(43) Date of publication of application: **28.05.2008**
(21) Application number: 06124574.2
(22) Date of filing: 22.11.2006
(51) Int. Cl.: G11B 7/09

(54) **Method and apparatus for accessing optical storage media**

(71) Applicant: Thomson Holding Germany GmbH & Co. OHG, 30625 Hannover (DE)
(72) Inventor: Basler, Stefan, 78086 Brigachtal (DE)
(74) Representative: Schmidt-Uhlig, Thomas

(57) **Abstract**

Described is a method and apparatus for detecting an anomaly in an apparatus for accessing optical storage media. In order to detect anomalies quickly, allowing to quickly alter servo control loop characteristics or parameters, a track error signal (TE, 101) and a high frequency data signal (HF, 102), are derived from signals of segments of a photodetector of the apparatus, each of the track error signal (TE, 101) and the high frequency data signal (HF, 102) is decomposed into two or more subband signals (105, 106, 107, 108), subband signals are rectified, maximum values (111, 112, 113, 114) are determined within windows, the maximum values (111, 112, 113, 114) of a subband signal are multiplied with a predetermined factor (405) associated with the subband, and added together, and a binary anomaly detect signal (117, 118, 410) is derived from the sum signal (409) by threshold comparison (408).

## Description

### Field of the invention

The present invention relates to the field of accessing optical storage media, in particular to the field of detecting anomalies during tracking and focus servo control therein.

### Background of the invention

In optical disk pickups during readout, tracking and focus is maintained by servo control loops having specific parameters like loop gain, delay settings etc. There is one set of servo loop parameter values which is optimal for a normal operation state. But when a pickup in operation suddenly is exposed to a non-stationary event (anomaly) like a mechanical shock, typically different settings of the servo loop parameters would be needed in order to optimally cope with this. Permanently setting control loop parameters that prove beneficial for shock handling, like high loop gain, has shown to be detrimental for normal operation. The performance of optical disk systems is usually degraded when exposed to a non-stationary environment. Anomalies like vibration conditions that may occur in portable or automotive systems may cause the optical servo to loose track and / or focus. Static measures are known to improve vibration performance only, like using a constantly high servo loop gain, but these may be counterproductive in situations of other servo anomalies like disk defects (e.g. scratches).

Known methods for detecting the anomaly of vibration are based on evaluating low-bandwidth lowpass filtered signals. They can be seen to have the disadvantage that due to the filtering which needs long impulse responses, detection is very slow.

Known methods for detecting the anomaly of track loss are based on evaluating subcode or sector ID data. They can be seen to have the disadvantage that they are slow because the evaluation involves a complete readout and data acquisition path, and also because some tolerance against defective subcodes or sector IDs has to be built into such methods. With other words, track loss detection based on data content, like monitoring sector number continuity, is inherently slow because it has to be tolerant against the "normal" level of defective IDs.

### Invention

A problem to be addressed by the invention is to provide a method and apparatus to detect quickly anomalies like vibration and / or track loss, in order to be able to alter servo control loop characteristics or parameters in an adaptive manner. This improves servo performance in situations of vibration conditions, without degrading normal playback / recording performance. Even in situations of strong anomaly, where adapting control loop characteristics does not help and one of the servo control loops can not be kept anymore (gets unlocked), detecting loss of track or focus as soon as possible after occurrence assists in quickly applying countermeasures, so that the time of incorrect playback / recording is decreased or kept to a minimum.

The invention proposes and describes an apparatus and a method for photodetector signal evaluation which generates binary status signals (anomaly detect signals) like "track loss" or "vibration".
- As input to the evaluation, conventional track error and HF readout signals are proposed, which both are anyway being generated in a read pickup.
- On both of these signals, the invention then does a first processing step, namely a frequency decomposition with a very simple dyadic Haar wavelet decomposition. In the implementation example, 2x11 bands are used.
   - In a subsequent second processing step, all the bands are rectified and envelope detected. Because this is done for blocks of samples, envelope detection amounts to determining a maximum of a signal over a block.
   - In a third processing step, all the maxima are combined into a weighted sum, the weights of which are proposed to be learned by a state of the art "delta rule" approach from neural networks. Conceptually, the weights are treated as components of a multidimensional "weight vector".
   - In the learning phase, a sample sequence of track error and HF signal samples together with a manual classification into "track loss" Y/N and "shock" Y/N intervals has to be provided. From these, the delta rule derives optimum weights which approximate the manual classification as well as possible.

Advantages:
- Because of the nature of wavelet decomposition, detection can be fast.
- Quickly detecting "loss of track" enables to select control loop parameters that allow quick re-entry into the locked state, thereby minimizing dropout time.
- In all processing steps, the track error and HF signals are treated alike. This is favourable for re-use of SW or HW components.
- Method can easily be extended to other exception criteria like focus loss.

According to the invention, the problem of the invention is addressed when a method of detecting an anomaly in an apparatus for accessing optical storage media, has steps of
- deriving, from signals of segments of a photodetector, a track error signal and a high frequency data signal,
- decomposing each of the track error signal and the high frequency data signal into two or more subband signals,
- deriving rectified subband signals from the subband signals,
- determining, within a window of neighbouring samples of individual ones of the rectified subband signals, maximum values,
- multiplying the maximum values of a subband signal with a predetermined factor associated with the subband,
- adding together into a sum signal all multiplied maximum values of all the individual subband signals,
- deriving, from the sum signal, a binary anomaly detect signal by threshold comparison.

According to the invention, as the predetermined factors, factors derived in a separate learning phase are used. This has the advantage of allowing the use of a single processing structure and still be adaptive to different settings.

According to the invention, the step of decomposing is done using a dyadic wavelet decomposition having two or more stages, in particular employing a Haar transform.

According to the invention, the size of the window is chosen according to the stage of the respective subband signal.

According to the invention, the step of adding together the multiplied maximum values comprises adding a bias signal thereto.

An apparatus according to the invention has a single subband decomposing unit equipped and configured to perform subband decomposition sequentially on the track error signal and the high frequency data signal.

An apparatus according to the invention has a single rectifier and envelope detector unit equipped and configured to perform the deriving of rectified subband signals and the determining of maximum values sequentially on the subband signals of the track error signal and on the subband signals of the high frequency data signal.

An apparatus according to the invention, when used to detect two or more different anomalies, has a single weighted sum and threshold unit which is equipped and configured to evaluate the maximum values repeatedly on the same data, using an individual set of predetermined factors for each anomaly.

### Drawings

Exemplary embodiments of the invention are illustrated in the drawings and are explained in more detail in the following description.

In the figures:
- Fig. 1: shows a block diagram for detecting anomalies of vibration and track loss according to the invention;
- Fig. 2: shows the structure of a general dyadic wavelet tree;
- Fig. 3: shows the base function pair of the Haar Transform;
- Fig. 4: shows the inner structure of the weighted sum and threshold block;
- Fig. 5: shows the dyadic wavelet composition and the rectifier and envelope detector for an example configuration;
- Fig. 6: shows an example track error signal and 11 subband signals it is decomposed into;
- Fig. 7: shows an example high frequency signal and 11 subband signals it is decomposed into; and
- Fig. 8: shows the example high frequency and track error signals together with a track loss detection signal and a vibration detect signal derived therefrom.

### Exemplary embodiments

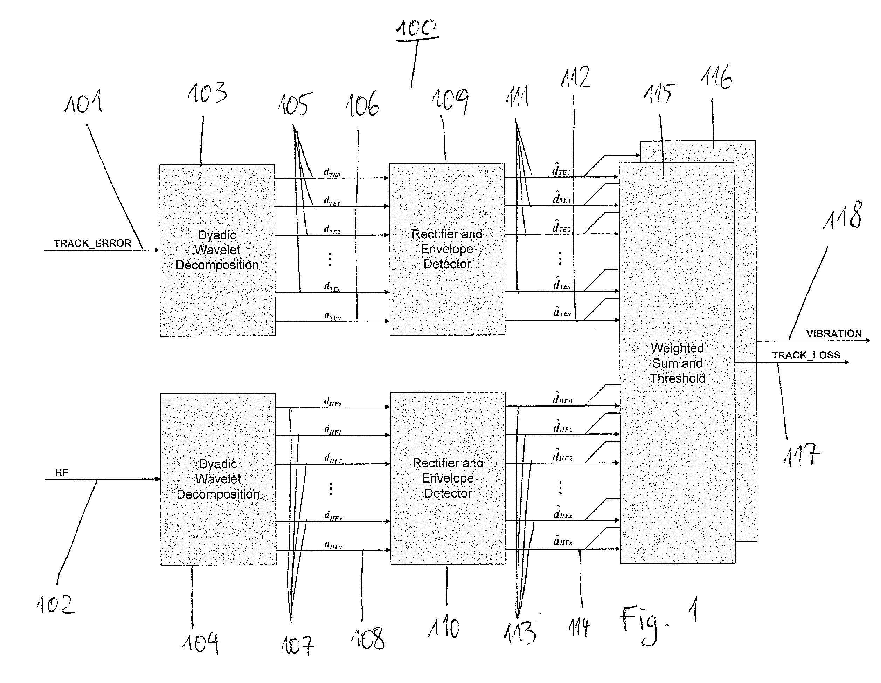

**Figure 1** shows a block diagram suitable for performing the proposed method. Two kinds of signals inherent to the optical disk system are evaluated: the data signal also known as high frequency signal HF 102 and the track error signal TE 101. Both these signals are derived, not shown in Fig. 1, from signals of individual segments of a multi-segment photodetector, onto which a reflected beam from the disc is projected. The signals are jointly evaluated and analysed to detect vibration conditions and track loss in an optical disk system. In a first processing step, each of the input signals HF 102, TE 101 is decomposed into frequency subbands, namely into a set of high pass signals or detail signals *dₒ,K,dₓ* 105, 107 and a single low pass signal or approximation signal *aₓ* 106, 108, respectively. The subband signals of the track error signal TE 105, 106 are denominated by an index TE, and those of the high frequency signal HF 107, 108 by an index HF. For the multiresolution signal decomposition a dyadic wavelet decomposition 103, 104 is used, which is a special form of the discrete wavelet transform with dyadic (power of two) scaling factors. In particular, using the so-called Haar wavelet as base function has the advantage that it requires only addition and subtraction operations and hence allows an efficient implementation with sufficient quality.

The rectifier and envelope detector blocks 109, 110 process the output signals *d*₀,K,*dₓ* 105, 107 and *aₓ* 106, 108 of the dyadic wavelet decomposition blocks 103, 104. They first rectify the signals by calculating the absolute value of their respective input signal, and then the envelope detector determines the peak or maximum value *d̂*₀,K,*d̂ₓ, âₓ* of the rectified signals over a certain window W of neighbouring values. In this, it is important that the window W over which the peak or maximum values are determined is also scaled in a dyadic fashion. That is, for the samples of the lowest frequency channel *d̂*₀, the maximum window covers twice as many samples as the window for *d̂*₁, the maximum window for *d̂*₁ covers twice as many samples as the one for *d̂*₂, and so on, until, for the *d̂ₓ*, and *âₓ,* i.e. for the output signals from the last stage, the maximum window W covers only one sample, so that the function degenerates to the absolute magnitude alone. This choice of window sizes W results in a uniform sampling rate for all *d̂ᵢ* and the *âₓ* with respect to the samples of the input signals 101, 102; with other words the windows are synchronized.

The structure shown in Fig. 1 has the advantage that the two kinds of input signal, namely track error signal TE 101 and high frequency signal HF 102 are treated completely alike with respect to the dyadic wavelet decomposition, and are treated alike except using different weight vectors, in the rectifier and envelope detectors. regardless of whether these blocks are implemented in hardware or software, this allows for considerable simplifications, amounting to pipelining in case of hardware, and to compact function code in case of software.

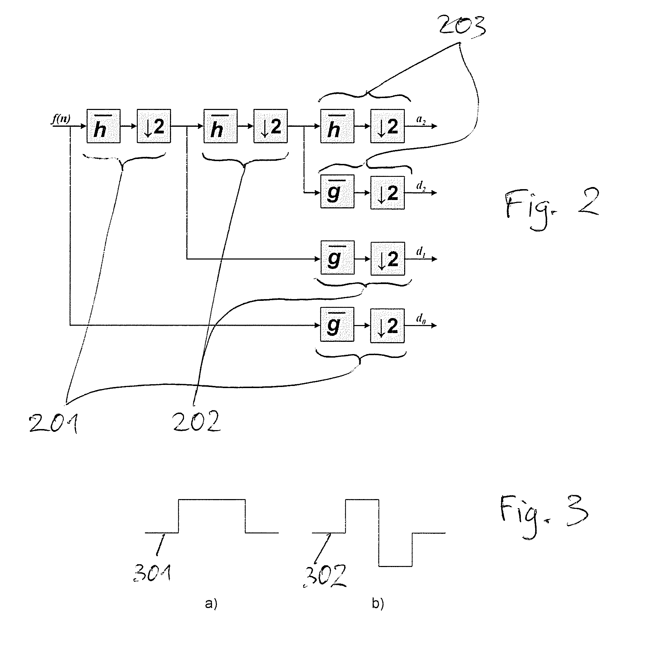

**Figure 2** shows the structure of a general dyadic wavelet tree having three stages 201, 202, 203. The h and g are the scaling function and the wavelet function, respectively. The scaling function can be interpreted as a low-pass filter and the wavelet function as a high-pass filter. The scaling function 301 and the wavelet function 302 for the Haar wavelet are depicted in **Figure 3**. In their simplest form, the scaling function 301 corresponds to an impulse response of (1,1), and the wavelet function 302 corresponds to an impulse response of (1,-1), both of length 2. The output of the filters is downsampled by a factor of two, denoted by ↓2 in Fig. 2, resulting in so-called approximation signals a and detail signals d. The number of stages 201, 202, 203 and hence the size of the wavelet tree for the proposed method can be chosen as a system design parameter.

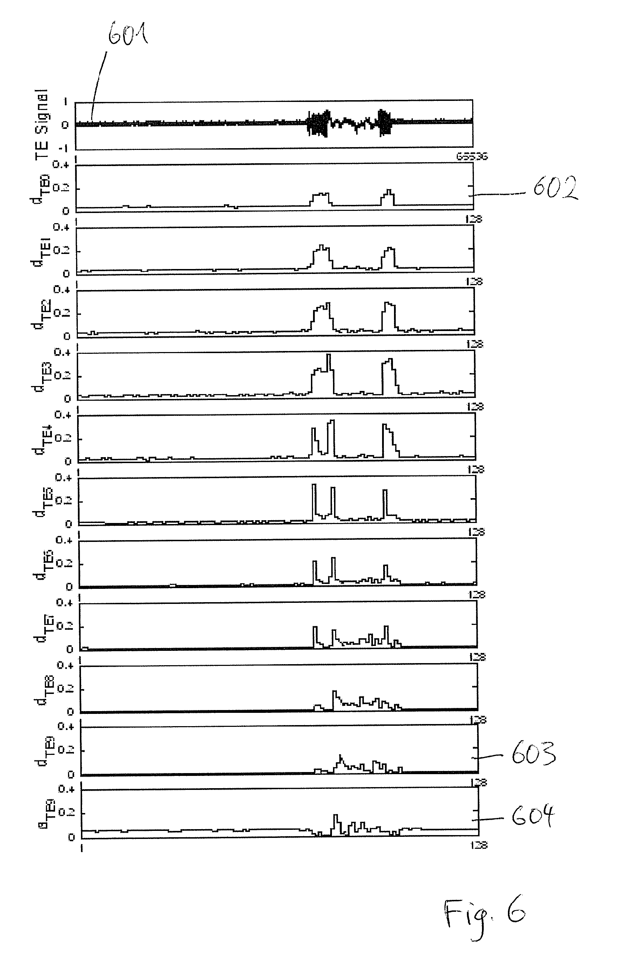

**Figure 6** shows an example track error signal 601 and 11 subband signals it is decomposed into. The subband signals are shown in order of decreasing pass band frequency, starting with the first stage highpass signal *d*₀ 602, all through to the last stage highpass signal *d*₉ 603 and the last stage lowpass signal a₉ 604. The example track error signal 601 comprises 65536 samples, and the subband samples each have 128 samples, so that each of the subband samples represents properties of a block of 512 consecutive samples from the example track error signal 601.

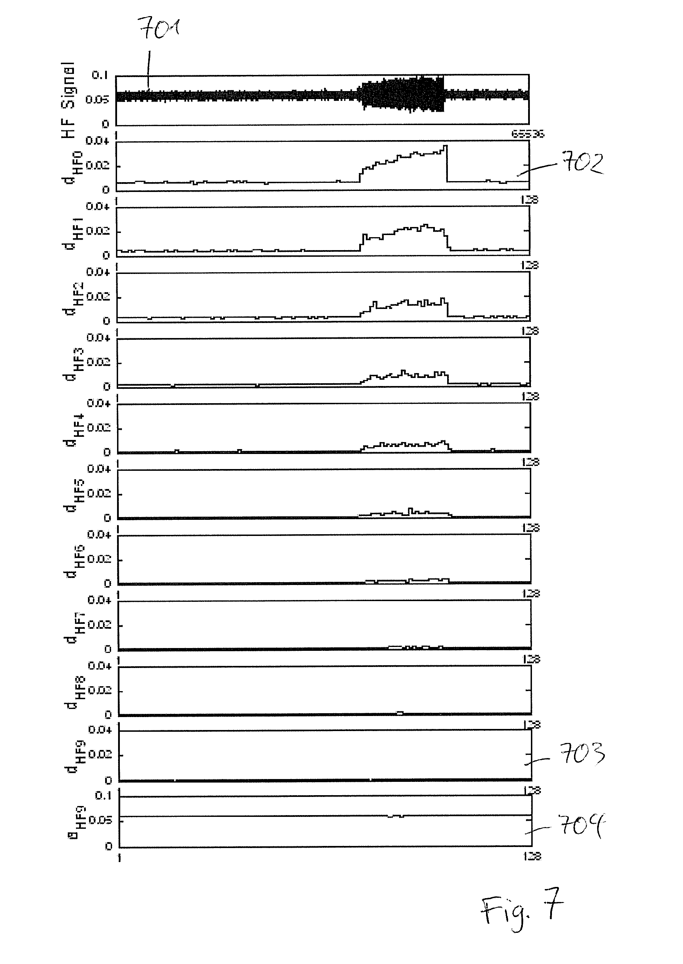

Fig. 7 shows an example high frequency signal 701 and 11 subband signals it is decomposed into. The subband signals are shown in order of decreasing pass band frequency, starting with the first stage highpass signal *d*₀ 702, all through to the last stage highpass signal *d*₉ 703 and the last stage lowpass signal *a*₉ 704.
The numbers of samples of the signals and their relation correspond to those of Fig. 6.

In the form shown in Fig. 2, the input samples f(n) are processed in nonoverlapping, contiguous blocks of 8 samples. Each of these blocks is converted into a single value *a*₂ representing the average of the entire block, a single value *d*₂ representing the difference between the averages of the left and right halves of the block, two values *d*₁ representing the difference between the left and right quarter of the left respectively right half of the block, and 4 values *d*₀, each representing the difference between the two samples of the consecutive sample pairs within the block.

As delimiting factors for applying the dyadic wavelet transform to the task of anomaly detection are the sampling frequency of the input signal, the characteristics of the low frequency components of the input signal as well as the required output sampling frequency. Depending on the application, the downsampling stage for some or all of the *d̂*ᵢ and the *âₓ*, may or may not be omitted. The output signals 111, 112, 113, 114 from the rectifier and envelope detector blocks 109, 110 are then forwarded to two weighted sum and threshold blocks 115, 116, one for detecting the anomaly of vibration, and the other for detecting the anomaly of track loss. Each of these weighted sum and threshold blocks 115, 116 constitutes a structure known as "perceptron" in the field of neural networks.

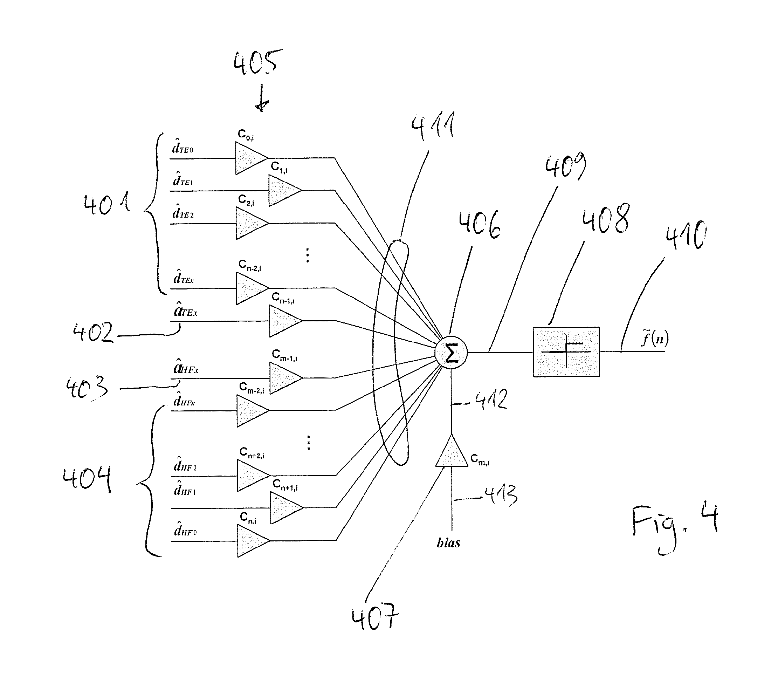

**Figure 4** shows a schematic of one of the weighted sum and threshold blocks. All the *d̂ᵢ* 401, 404 and the *âₓ* 402, 403 calculated from the input signals are each weighted by multiplication 405 with an individual factor and the weighted signals 411 are added together 406 into a sum signal 409. The sum signal 409, in the general case, also contains, as one of its summands, a bias signal 412 which is derived by multiplying an arbitrary constant 413 by an adjustable bias weight 407.

An advantage of the structure of this weighted sum block is that the individual weights can be determined based on off-line learning using the delta rule known e.g. in the domain of neural networks, as in Bothe: "Neuro-Fuzzy-Methoden - Einführung in Theorie und Anwendungen", Springer (Berlin) 1998, p. 122ff. The method is also known as "Widrow-Hoff Least Mean Squares adaptive algorithm". The weighted sum and threshold block outputs a bi-valued or binary anomaly detect signal 410 which is derived by comparing 408 the weighted sum 409 with a threshold.

Adding together individually weighted input signals 411 and a weighted bias 412, one can actually, without loss of generality, choose the threshold used in the comparison 408 as unity. The structure is equivalent to having no bias and comparing with an arbitrarily selectable threshold. The form shown in Fig. 4 has the advantage that all the summands have identical structure and quality, from which a smooth convergence of the learning iterations is to be expected.

The offline learning phase to determine the weight vector is based on the known so-called "delta rule", as used in the area of neural networks. An example for the offline-learning phase consists in inputting to the described detector apparatus recorded high frequency signals HF and track error signals TE covering all relevant cases of anomaly as well as normal operation, together with a learning sample where these data are classified into track loss / no track loss and vibration / no vibration. The system is first initialised with a random weight vector, and subsequently, the following sequence of steps is iterated:
- Calculating classification data, i.e. anomaly detection data, for the complete input data sample.
- Comparing the classification data with the learning sample, which is considered to be the desired or correct classification of the input data sample; calculating classification difference as a quality criterion.
- deriving a differential weight vector from the quality criterion, from a global convergence constant (the so-called "learning rate"), and from the individual input data samples.
- updating the weight vector by incrementing it with the differential weight vector. for ending the iterations, several criteria are known: One can continue iterations until the classification difference falls below a predetermined threshold, or one can arbitrarily set a number of iterations to be performed, stopping when this number has been reached, regardless of the classification quality reached by then.

At the end of such offline learning phase, typically, some of the components of the weight vector have substantially higher values than others. In case of the track loss detector, significantly big weights typically emerge for high frequency components of the track error signal.

It is possible to perform the described offline learning phase once as part of the apparatus design. It is also possible to perform it individually, for each individual apparatus, as part of the assembly and factory alignment process. In the latter case, the described offline learning phase advantageously takes into account variations of mechanical and/or electrical characteristics of the individual apparatus.

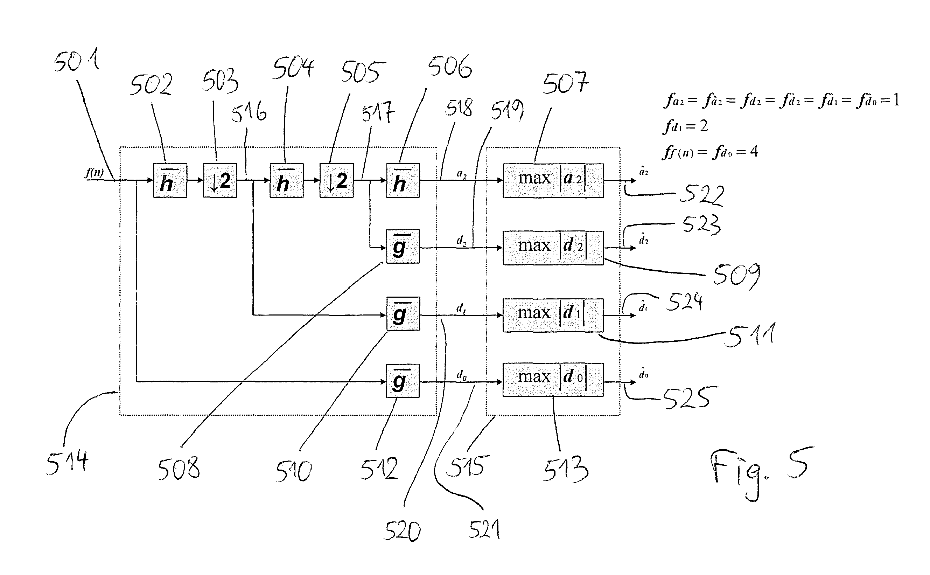

**Figure 5** shows a block diagram of an example apparatus according to the invention. Samples of a sequence of input signal samples f(n) 501 are processed in the dyadic wavelet decomposition stage 514, the output of which is then processed in the rectifier and envelope detector stage 515. From the sequence of input signal samples f(n) 501, nonoverlapping, contiguous blocks of 8 samples are sequentially processed in the dyadic wavelet decomposition stage 514. Therein, a first lowpass filter 502 and a subsequent subsampling 503 are applied, generating 4 samples of a first intermediate signal 516. To the first intermediate signal 516, a second lowpass filter 504 and a subsequent subsampling 505 are applied, generating 2 samples of a second intermediate signal 517. To the second intermediate signal 517, a third lowpass filter 506 and a first highpass filter 508 are applied, each generating 2 samples of a third intermediate signal 518, and a fourth intermediate signal 519, respectively. To the first intermediate signal 516, a second highpass filter 510 is also applied, generating 4 samples of a fifth intermediate signal 520. To the input signal 501, a third highpass filter 512 is also applied, generating 8 samples of a sixth intermediate signal 521.

A first rectifier and envelope detector unit 507 calculates 2 maximum values 522 from magnitudes of pairs of consecutive values of the third intermediate signal 518. A second rectifier and envelope detector unit 509 calculates 2 maximum values 523 from magnitudes of pairs of consecutive values of the fourth intermediate signal 519. A third rectifier and envelope detector unit 511 calculates 2 maximum values 524, each using magnitudes of a quadruplet of consecutive values of the fifth intermediate signal 520. A fourth rectifier and envelope detector unit 513 calculates 2 maximum values 525, each using eight consecutive values of the sixth intermediate signal 521.

The apparatus shown in Fig. 5, besides calculating signal magnitudes and deriving an envelope thereof via the maximum search over local neighbourhood windows, adapts the window size to the subsampling that is prevalent in the subband being processed; in such a way that each of the calculated minima, independently of the subband in which it is being calculated, reflects a property of a constantly long subset of the input samples. With other words, although the maxima are detected over unequal number of samples for each subband, the sampling rate for all subbands is consistent.

Compared to so-called critically sampled subband filter banks as shown in Fig. 2, the structure shown in Fig. 5 lacks a last stage of subsampling on all the output signals 518, 519, 520, 521 of the dyadic wavelet decomposition stage 514. Provided that the overall signal processing load is manageable, this serves to avoid yet another processing stage, thereby keeping the overall delay small.

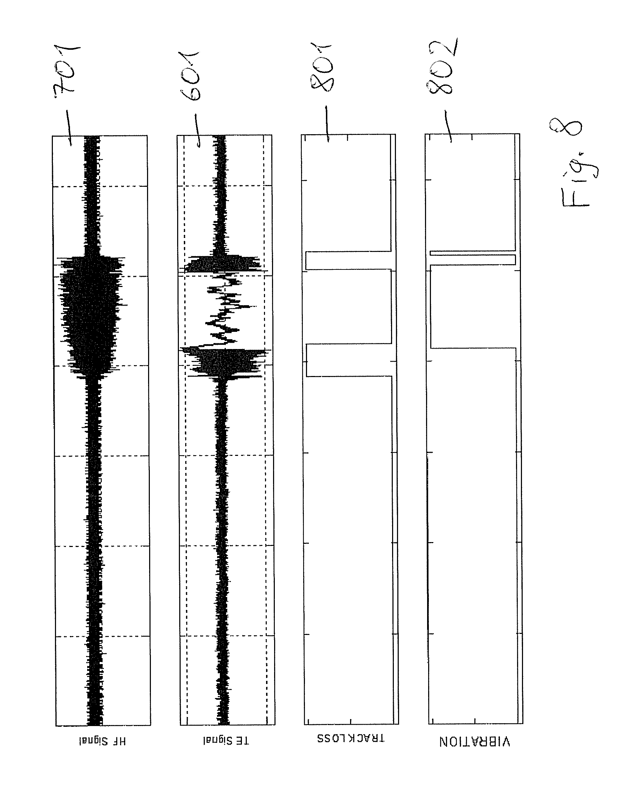

Figure 8 shows the example high frequency signal 701 and the example track error signal 601 together with a track loss detect signal 117, 801 and a vibration detect signal 118, 802 derived therefrom.

Advantages of the method and apparatus according to the invention are
- the track loss detection is not based on subcode / sector ID information, i.e. not on evaluating the meaning of decoded signals,
- instead, the detection is directly based on waveform of the readout signals, so that detection is fairly fast, ideally within few servo DSP processing cycles,
- parts of the methods can be implemented efficiently in hardware / software. In a variant of the invention, some of the output signals from the dyadic wavelet decomposition blocks are not evaluated any further. This is especially suitable for those signals which, according to the offline learning phase, end up having a small weight, so that they do not influence the threshold comparison stage much. This leaving away of some of the subband signals leads to a simplification of all blocks. Also, the method and apparatus of the invention can easily be extended to detecting other kinds of anomalies, like focus loss.

The invention can be applied to all optical drives in all applications.

## Claims

1. A method of detecting an anomaly in an apparatus for accessing optical storage media, comprising steps of
- deriving, from signals of segments of a photodetector of the apparatus, a track error signal (TE, 101) and a high frequency data signal (HF, 102),
- decomposing each of the track error signal (TE, 101) and the high frequency data signal (HF, 102) into two or more subband signals (105, 106, 107, 108),
- deriving rectified subband signals from the subband signals,
- determining, within a window (W) of neighbouring samples of individual ones of the rectified subband signals, maximum values (111, 112, 113, 114),
- multiplying the maximum values (111, 112, 113, 114) of a subband signal with a predetermined factor (405) associated with the subband,
- adding together into a sum signal (409) all multiplied maximum values of all the individual subband signals,
- deriving, from the sum signal (409), a binary anomaly detect signal (117, 118, 410) by threshold comparison (408).

2. The method of claim 1, where as the predetermined factors (405), factors derived in a separate learning phase are used.

3. The method of one of the previous claims, where the step of decomposing is done using a dyadic wavelet decomposition (103, 104) having two or more stages (201, 202, 203), in particular employing a Haar transform (301, 302).

4. The method of claim 3, wherein the size of the window (W) is chosen according to the stage (201, 202, 203) of the respective subband signal.

5. The method of one of the previous claims, wherein the step of adding together comprises adding a bias signal (407).

6. An apparatus (100) for detecting an anomaly in an apparatus for accessing optical storage media, equipped and configured to perform a method according to one of the previous claims.

7. The apparatus of claim 6, having a single subband decomposing unit (514) equipped and configured to perform subband decomposition sequentially on the track error signal (TE, 101) and the high frequency data signal (HF, 102).

8. The apparatus of claim 6 or claim 7, having a single rectifier and envelope detector unit (515) equipped and configured to perform the deriving of rectified subband signals and the determining of maximum values (111, 112, 113, 114) sequentially on the subband signals (105, 106) of the track error signal (TE, 101) and on the subband signals (107, 108) of the high frequency data signal (HF, 102).

9. The apparatus of claim 6 or claim 7 or claim 8, being used to detect two or more different anomalies, and having a single weighted sum and threshold unit (115, 116) equipped and configured to evaluate the maximum values (111, 112, 113, 114) repeatedly on the same data, using an individual set of predetermined factors (405) for each anomaly.
